# EUROPÄISCHE PATENTSCHRIFT

(11) **EP 3 052 980 B1**
(45) Veröffentlichungstag und Bekanntmachung des Hinweises auf die Patenterteilung: **16.08.2023**
(21) Anmeldenummer: 14827412.9
(22) Anmeldetag: 30.09.2014
(51) Int. Cl.: G02B 6/42

(54) **VORRICHTUNG ZUM EINKOPPELN UND/ODER AUSKOPPELN OPTISCHER SIGNALE**
DEVICE FOR COUPLING OPTICAL SIGNALS IN AND/OR OUT
DISPOSITIF D'INJECTION ET/OU DE SORTIE DE SIGNAUX DE SIGNAUX OPTIQUES

(30) Priorität: 30.09.2013 DE 102013110836; 22.03.2014 DE 102014205372
(43) Veröffentlichungstag der Anmeldung: 10.08.2016
(73) Patentinhaber: Silicon Line GmbH, 80687 München (DE)
(72) Erfinder: HOELTKE, Holger, 80995 Muenchen (DE); GROEPL, Martin, 87527 Sonthofen Oberallgaeu (DE)
(74) Vertreter: Hofmann, Andreas
(86) Internationale Anmeldenummer: PCT/DE2014/200521
(87) Internationale Veröffentlichungsnummer: WO 2015/043599

(56) Entgegenhaltungen:
- EP-A2- 2 778 730
- JP-A- 2001 021 776
- JP-A- 2005 235 815
- JP-U- H 041 506
- US-A- 5 467 419
- US-A1- 2004 061 956
- US-A1- 2005 191 012
- US-A1- 2006 039 658
- US-A1- 2013 084 043
- US-B1- 6 283 644

## Beschreibung

### Technisches Gebiet

Die vorliegende Erfindung betrifft grundsätzlich das technische Gebiet der optischen Unterbaugruppen oder der optischen Sub-Assemblys (OSA).

Im Spezielleren betrifft die vorliegende Erfindung eine Vorrichtung zum Einkoppeln optischer Signale in mindestens einen Wellenleiter gemäß dem Oberbegriff des Anspruchs 1 und des Weiteren eine komplementäre Vorrichtung zum Auskoppeln optischer Signale aus mindestens einem Wellenleiter gemäß dem Oberbegriff des Anspruchs 2 (vgl. Druckschrift US 2013/0084043 A1; zum Stand der Technik wird auch auf die Druckschriften JP 2001-021776 A, JP-H 041506 U, US 6 283 644 B1, US 2005/0191012 A1, EP 2 778 730 A2, US 2004 061956 A1, US 2006 039658 A1, JP 2005 235815 A oder US 5 467 419 A aufmerksam gemacht).

Des Weiteren betrifft die vorliegende Erfindung ein Verfahren zum Herstellen einer derartigen Vorrichtung zum Ein-/Auskoppeln optischer Signale in/aus mindestens einen/m Wellenleiter.

### Stand der Technik, insbesondere dessen Nachteile und technische Probleme

Vertical Cavity Surface Emitting Lasers (VCSEL) bzw. Fotodioden (PD) senden bzw. empfangen als optische Wandler, insbesondere als aktiv-optische Wandler, optische Signale im Wesentlichen senkrecht zu ihrer Oberfläche.

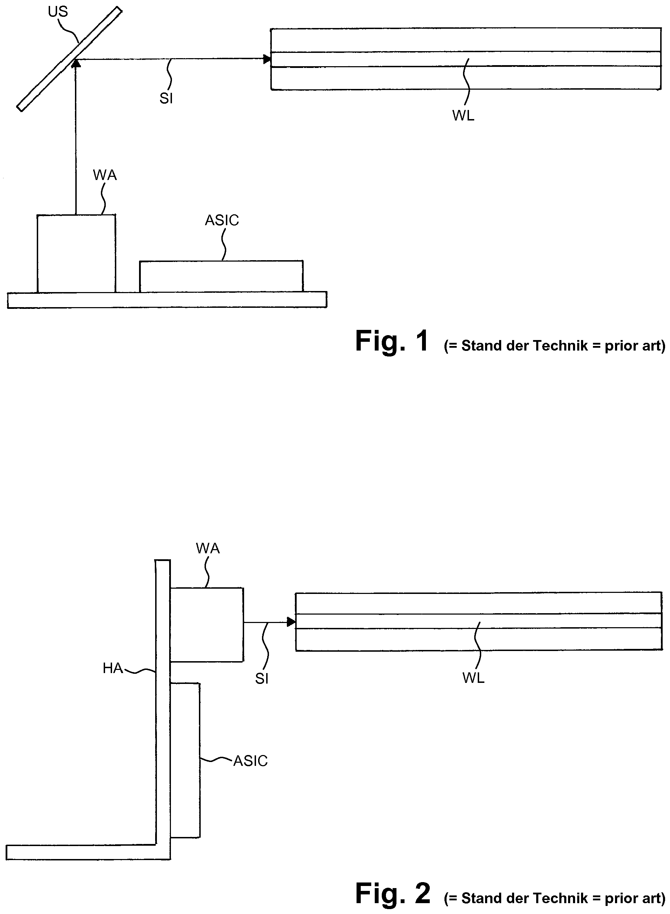

Um derartige optischen Signale SI in einen optischen Wellenleiter WL einzukoppeln bzw. aus einem optischen Wellenleiter WL auszukoppeln, sind die optischen Signale SI über einen 45 Grad-Umlenkspiegel US aus der Sende- bzw. Empfangsrichtung des optischen Wandlers WA in eine um neunzig Grad versetzte Ebene des Wellenleiters WL umzulenken, wie Fig. 1 entnehmbar.

So beschreibt die Druckschrift DE 10 2012 005 618 A1 ein aktives optisches Kabel, dessen Fasern stoffschlüssig an einem optischen Substrat befestigt sind. Die Fasern koppeln hierbei an einen integrierten optischen Wellenleiter. Ein Umlenkelement leitet den Freistrahl zur auf der Oberfläche des Substrats angeordneten Prozesseinheit, wobei der Freistrahl eine Richtungsänderung von neunzig Grad erfährt, um den Freistrahl in eine Sende-/Empfangseinheit zu lenken.

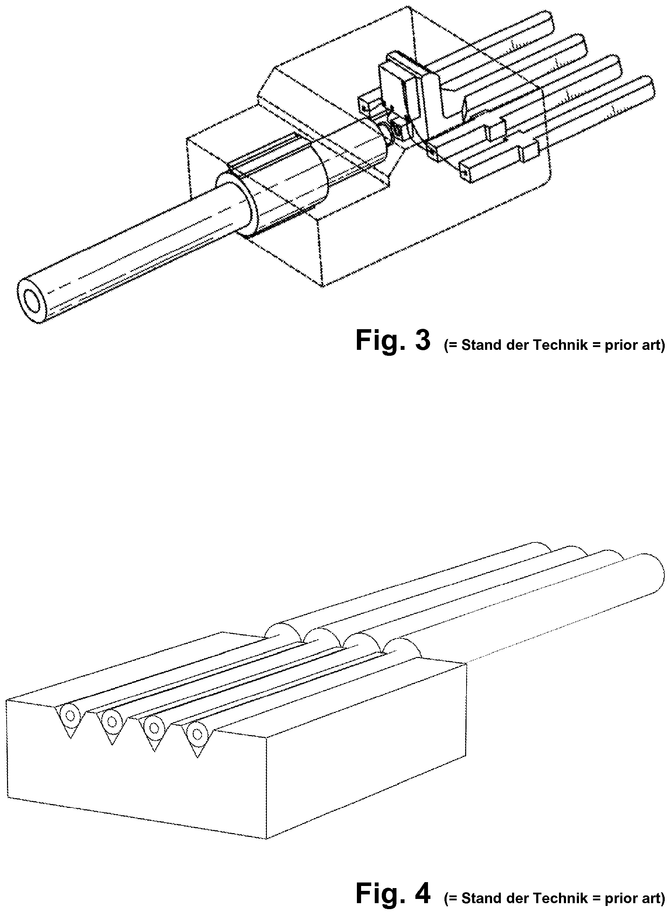

Alternativ lassen sich optische Wandler WA mittels einer entsprechenden Halterung HA so anordnen, dass ihre Sende- bzw. Empfangsrichtung der Ebene des Wellenleiters WL entspricht, wie Fig. 2 und Fig. 3 entnehmbar.

Nachteilig ist bei den aus dem Stand der Technik bekannten Lösungen, dass die Ausrichtung (sogenanntes Alignment) der optischen Achse zwischen dem Wellenleiter (= der optischen Faser) und dem optischen Wandler vielfach aktiv zu erfolgen hat.

Alternativ zum aktiven Ausrichten der optischen Faser besteht konventionellerweise die Möglichkeit, optische Fasern mittels sogenannter V-Grooves zum (mindestens einen) optischen Wandler auszurichten (vgl. Fig. 4).

Problematisch ist auch die Baugröße der bekannten Ein- und Auskoppelvorrichtungen. Aufgrund dieser Baugröße und Bauform eignen sich die bekannten Lösungen nicht zur Realisierung von Applikationen im Heim- und Mobilelektronikbereich. Dies impliziert längere Verbindungswege zwischen den Bauteilen und folglich längere Latenzzeiten.

Darüber hinaus ist der Herstellungsaufwand für die aus dem Stand der Technik bekannten Lösungen hoch und kostenintensiv.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Vorrichtung gemäß dem Oberbegriff des Anspruchs 1 sowie eine Vorrichtung gemäß dem Oberbegriff des Anspruchs 2 so weiterzubilden, dass ein aktives Ausrichten des Wellenleiters nicht erforderlich ist; des Weiteren soll eine entsprechende Miniaturisierung der Ein- und Auskoppelvorrichtung bei geringen optischen Verlusten ermöglicht werden und gleichzeitig der Aufwand in der Herstellung gering sein.

Diese Aufgabe wird durch eine Vorrichtung mit den Merkmalen des Anspruchs 1 sowie durch eine Vorrichtung mit den Merkmalen des Anspruchs 2 gelöst, insbesondere durch eine miniaturisierte sowie modularisierte aktiv-optische Sendeeinheit und/oder durch eine miniaturisierte sowie modularisierte aktiv-optische Empfangseinheit, die mittels eines Verfahrens mit den Merkmalen des Anspruchs 14 herstellbar ist. Vorteilhafte Ausgestaltungen und zweckmäßige Weiterbildungen der vorliegenden Erfindung sind in den jeweiligen Unteransprüchen gekennzeichnet.

Bei der vorliegenden Erfindung können über elektrische Anschlusskontakte eingehende elektrische Signale in mindestens einem Schaltkreis verarbeitet werden. Der Schaltkreis, der als anwendungsspezifische integrierte Schaltung oder als Application-Specific Integrated Circuit (ASIC), zum Beispiel als custom chip, ausgeführt sein kann, steuert mindestens einen elektro-optischen Wandler, insbesondere mindestens einen Laser, zum Beispiel mindestens einen Vertical Cavity Surface Emitting Lasers (VCSEL), an.

Dieser elektro-optische Wandler ist in mindestens einer sendeseitigen optischen Unterbaugruppe oder in mindestens einem sendeseitigen optischen Sub-Assembly (OSA) aufgenommen oder integriert, insbesondere eingebettet, und sendet die gewandelten optischen Signale axial in mindestens einen Wellenleiter, zum Beispiel in mindestens eine Glasfaser, aus.

Die sendeseitige optische Unterbaugruppe weist mindestens einen Führungskanal zum Ausrichten des Wellenleiters in Bezug auf den elektro-optischen Wandler, insbesondere in Bezug auf die Austrittsöffnung oder aktive Fläche des elektro-optischen Wandlers, auf.

Die sendeseitige optische Unterbaugruppe ermöglicht eine modulare Bauweise, und insbesondere eine Ausrichtung bzw. Fixierung des Wellenleiters bezüglich des elektro-optischen Wandlers. Hierdurch können die Abmessungen der sendeseitigen Vorrichtung gemäß der vorliegenden Erfindung reduziert werden, wobei die Modularisierung auch unter produktions- und kostentechnischen Gesichtspunkten als sehr vorteilhaft anzusehen ist.

Die sendeseitige optische Unterbaugruppe kann einem Substrat zugeordnet sein, das als Aufnahmemedium für den sendeseitigen Schaltkreis und für die sendeseitigen Anschlusskontakte fungieren kann. Des Weiteren kann das Substrat über Kommunikationsschnittstellen und elektrische Verbindungen verfügen, um die Kommunikation der einzelnen Komponenten miteinander zu ermöglichen.

Empfangsseitig werden die über den Wellenleiter eingehenden optischen Signale durch mindestens einen opto-elektrischen Wandler aus Richtung der Achse des Wellenleiters, insbesondere der Glasfaser, ausgekoppelt.

Dieser opto-elektrische Wandler, der mindestens eine Diode, insbesondere mindestens eine Fotodiode, sein kann, ist in mindestens einer empfangsseitigen optischen Unterbaugruppe oder in mindestens einem empfangsseitigen optischen Sub-Assembly (OSA) aufgenommen oder integriert, insbesondere eingebettet, und wandelt die optischen Signale in elektrische Signale um.

Die gewandelten elektrischen Signale können an mindestens einen empfangsseitigen Schaltkreis, insbesondere an mindestens eine anwendungsspezifische integrierte Schaltung oder an mindestens einen Application-Specific Integrated Circuit (ASIC), zum Beispiel an mindestens einen custom chip, ausgegeben werden.

Der empfangsseitige Schaltkreis verarbeitet und erforderlichenfalls verstärkt die eingehenden elektrischen Signale und gibt diese Signale an empfangsseitige Anschlusskontakte aus.

Die empfangsseitige optische Unterbaugruppe weist mindestens einen Führungskanal zum Ausrichten des Wellenleiters in Bezug auf den opto-elektrischen Wandler, insbesondere in Bezug auf die Eintrittsöffnung oder aktive Fläche des elektro-optischen Wandlers, auf.

Die empfangsseitige optische Unterbaugruppe ermöglicht eine modulare Bauweise, und insbesondere eine Ausrichtung bzw. Fixierung des Wellenleiters bezüglich des opto-elektrischen Wandlers. Hierdurch können die Abmessungen der empfangsseitigen Vorrichtung gemäß der vorliegenden Erfindung reduziert werden, wobei die Modularisierung auch unter produktions- und kostentechnischen Gesichtspunkten als sehr vorteilhaft anzusehen ist.

Die empfangsseitige optische Unterbaugruppe kann einem Substrat zugeordnet sein, das als Aufnahmemedium für den empfangsseitigen Schaltkreis und für die empfangsseitigen Anschlusskontakte fungieren kann. Des Weiteren kann das Substrat über Kommunikationsschnittstellen und elektrische Verbindungen verfügen, um die Kommunikation der einzelnen Komponenten miteinander zu ermöglichen.

Erfindungsgemäß wird also mittels eines geeigneten Herstellungsverfahrens eine, insbesondere aus mindestens einem optisch transparenten oder optisch teiltransparenten Medium, zum Beispiel aus mindestens einem Polymer, gefertigte optische Unterbaugruppe (sogenanntes optisches Sub-Assembly oder OSA) geformt, das zum einem ausschließlich den oder die optischen Wandler in vorzugsweise optisch transparentem Material aufnimmt und zum anderen die präzise direkte Ausrichtung der optischen Achse des optischen Wandlers zur optischen Achse einer optischen Faser ohne Ferrule, blanke Faser (sogenannte bare fiber) und ohne Linse übernimmt.

Diese Anforderungen an das optische Sub-Assembly gemäß der vorliegenden Erfindung werden durch die Anordnung der Elemente im optischen Sub-Assembly und durch die Formgebung des optischen Sub-Assemblys erreicht.

Das Herstellungsverfahren gemäß der vorliegenden Erfindung kann ein dreidimensionales mikro-stereolithografisches Druckverfahren sein, das während des Drucks den optischen Wandler in das vorzugsweise optisch transparente Material, zum Beispiel in ein optisch transparentes Polymer, ein bettet.

Das Herstellungsverfahren gemäß der vorliegenden Erfindung erlaubt neben der Einbettung der optischen Wandler, der Anordnung der Elemente und der präzisen Formgebung des optisch transparenten Materials auch die metallische Kontaktierung der Anschlusskontakte, zum Beispiel der Anode und der Kathode, der jeweils eingebetteten optischen Wandler.

Auf diese Weise ist es möglich, zeitgleich tausende derartige optische Sub-Assemblys bei Anordnung in einem linearen zweidimensionalen Muster auf zum Beispiel einem Glasträger herzustellen, wodurch eine sehr günstige Kostenstruktur für diese optischen Sub-Assemblys gewährleistet ist.

Gemäß der vorliegenden Erfindung ist der Führungskanal konisch ausgebildet, wobei eine auf den Wandler zulaufende Ausgestaltung das Einführen oder Einsetzen des optischen Wellenleiters erleichtert.

In Verbindung hiermit ist der Führungskanal abgestuft oder mehrstufig ausgebildet, wobei sich der Innendurchmesser des Führungskanals in Richtung auf den Wandler hin verkleinert, um das Einführen oder Einsetzen des optischen Wellenleiters zu erleichtern.

In einer vorteilhaften Weiterbildung der vorliegenden Erfindung erlaubt es die Formgebung des Führungskanals, dass der Kern des Wellenleiters auf der Austrittsöffnung oder aktiven Fläche des elektro-optischen Wandlers bzw. auf der Eintrittsöffnung oder aktiven Fläche des opto-elektrischen Wandlers direkt aufsitzt bzw. sich in einem Abstand von nur wenigen, zum Beispiel von etwa zwanzig, Mikrometern darüber befindet.

Gemäß einer bevorzugten Ausführungsform der vorliegenden Erfindung kann der Führungskanal in Bezug auf seine Umfangslinie geschlossen oder partiell geöffnet ausgebildet sein. Im Falle einer derartigen partiellen Öffnung kann beim Einsetzen des Wellenleiters in den Führungskanal eingeschlossene und/oder komprimierte Luft mittels mindestens einer Luftaustrittsöffnung abgeleitet werden. Auf diese Weise können eine schlechte optische Kopplung und somit optische Verluste zwischen dem Wandler und der optischen Faser in zuverlässiger Weise vermieden werden.

In zweckmäßiger Weise kann die Luftaustrittsöffnung am dem Wandler zugewandten Ende des Führungskanals angeordnet sein, zum Beispiel in Form mindestens eines in die optische Unterbaugruppe eingebrachten Durchlasses, insbesondere in Form mindestens einer in die optische Unterbaugruppe eingebrachten Bohrung, wobei die axiale Erstreckung des Durchlasses quer, insbesondere im Wesentlichen senkrecht, zur Richtung der Achse oder des Kerns des Wellenleiters verlaufen kann.

Alternativ oder ergänzend hierzu kann die Luftaustrittsöffnung nutförmig oder kanalförmig ausgebildet sein und/oder sich entlang dem Führungskanal, insbesondere über die gesamte Länge des Führungskanals, erstrecken.

Gemäß einer zweckmäßigen Ausgestaltungsform der vorliegenden Erfindung ist der Wellenleiter, insbesondere in der Ebene des Substrats, koaxial zu einem an den Anschlusskontakten befestigbaren Peripheriekabel oder Peripheriekontakt ausgerichtet. Dies kann besonders für den Aufbau von optisch aktiven Kabeln von Bedeutung sein.

Gemäß einer bevorzugten Ausführungsform der vorliegenden Erfindung kann die Vorrichtung ein umschließendes Gehäuse aufweisen, durch das die Vorrichtung vor äußeren Einflüssen schützbar ist. Dies ist besonders für den Gebrauch als optisch aktives Kabel von Bedeutung, zumal das Gehäuse dann als Stecker mit einem Mechanismus zur Fixierung an Peripheriegeräten eingesetzt werden kann.

Die vorliegende Erfindung betrifft schließlich die Einbettung mindestens eines elektro-optischen Wandlers, insbesondere mindestens eines vertikal strahlenden Lasers (VCSEL = Vertical Cavity Surface Emitting Laser), bzw. mindestens eines opto-elektrischen Wandlers, insbesondere mindestens einer Fotodiode (PD = Photo Diode), in einem optisch transparenten Material, das gleichzeitig zur mechanischen Führung und Ausrichtung mindestens einer optischen Faser zu diesen optischen Wandlern dienen kann.

Die zum Einkoppeln bzw. Auskoppeln optischer Signale vorgeschlagene Vorrichtung kann als optisches Sub-Assembly (OSA = optical sub-assembly) oder mechanische Aufnahme bezeichnet werden und lässt sich in vielen Anwendungsbereichen gewinnbringend einsetzen, in erster Linie zur schnellen Signalübertragung zwischen zwei Komponenten mit elektrischer Signalführung.

So betrifft die vorliegende Erfindung vor allem die Verwendung zum Aufbau von, insbesondere steckbaren, aktiven optischen Kabeln zur schnellen und verlustarmen Signalumwandlung sowie Datenübertragung auf sehr kleinem Raum, um die elektrisch prozessierten Daten schnell an die verschiedenen Einheiten weiterzuleiten. Die extrem kurzen Leitungswege innerhalb der Vorrichtung ermöglichen sehr kurze Latenzzeiten.

Erfindungsgemäß erlaubt die Modularisierung einen extrem hohen Automatisierungsgrad in der Fertigung. Durch den getrennten Aufbau des Substrats mit ASIC und der optischen Unterbaugruppe mit eingebettetem elektro-optischem und/oder opto-elektrischem Wandler, insbesondere mit eingebettetem elektro-optischem Sender und/oder mit eingebettetem opto-elektrischem Empfänger, und fest verbundener Faser ist eine getrennte Weiterverarbeitung der beiden Komponenten möglich.

Beispielsweise kann das Substrat mit ASIC in einem automatisierten "Pick and Place"-Prozess per Maschine auf einer Leiterplatte bestückt und schwallgelötet werden, währenddessen die optische Unterbaugruppe mit der meist hitzeempfindlichen Faser in einem späteren Prozessschritt zugeordnet werden kann.

Ebenso denkbar ist die Verwendung als steckbares aktives optisches Kabel, um Peripheriegeräte anzuschließen, wobei das Kabel in seinen Stecker-Enden die Signalverarbeitung der elektrischen Eingangs- bzw. Ausgangsignale vornimmt, des Weiteren die Wandlung von elektrischen Signalen in optische Signale bzw. von optischen Signalen in elektrische Signale mittels elektro-optischer bzw. opto-elektrischer Wandler übernimmt sowie die Ein- bzw. Auskopplung des optischen Signals in den Wellenleiter bzw. aus dem Wellenleiter sicherstellt.

Hierbei können auch bidirektionale Kabel, insbesondere wenn Sende- und Empfangskomponente in einem Aufnehm-/Ausrichtmodul integriert sind, oder laufrichtungsunabhängige Kabel, wenn der elektro-optische Wandler zugleich auch ein opto-elektrischer Wandler ist, zur Verfügung gestellt werden.

Darüber hinaus lässt sich ein neuartiger Aufbau eines miniaturisierten elektro-optischen Senders und/oder eines miniaturisierten opto-elektrischen Empfängers mit an der optischen Unterbaugruppe oder am optischen Sub-Assembly (OSA) fest verbundenem optischem Wellenleiter zur Übertragung von elektrischen Signalen über einen solchen optischen Wellenleiter mit dieser Vorrichtung realisieren.

Die vorliegende Erfindung zeichnet sich durch einen hohen Miniaturisierungsgrad aus, der auf die erfindungsgemäße Art der Positionierung, Modularisierung und Integrierung der Komponenten zurückzuführen ist. Dies ermöglicht den Aufbau eines aktiven optischen Kabels oder A[ctive]O[ptical]C[able]s mit mindestens einer derartigen miniaturisierten optischen Unterbaugruppe oder mit mindestens einem derartigen miniaturisierten optischen Sub-Assembly (OSA).

Der Aufbau eines derartigen extrem kleinen, miniaturisierten optischen Sub-Assemblys ermöglicht wiederum den Aufbau eines miniaturisierten elektro-optischen Senders oder eines miniaturisierten opto-elektrischen Empfängers, jeweils mit verbundenem optischem Wellenleiter oder mit verbundener optischer Faser, wobei die mit dem optischen Sub-Assembly verbundene optische Faser durch dieses optische Sub-Assembly, insbesondere durch den im optischen Sub-Assembly eingearbeiteten Führungskanal, geführt und ausgerichtet wird.

Durch die direkte Integration des Wellenleiters in die optische Unterbaugruppe, insbesondere durch den Einsatz transparenter Medien für die Fertigung der optischen Unterbaugruppe, lassen sich sehr kurze Signalverbindungslängen, zum Beispiel Bonddrahtlängen, erzielen, was insbesondere bei sehr hohen Datenübertragungsraten zum Erhalt der Signalqualität beiträgt und die Latenzzeiten reduziert.

Ebenso lassen sich durch die Modularisierung gemäß der vorliegenden Erfindung erhebliche Kosten in der Produktion, zum Beispiel durch einen höheren Automatisierungsgrad, einsparen.

### Kurze Beschreibung der Zeichnungen

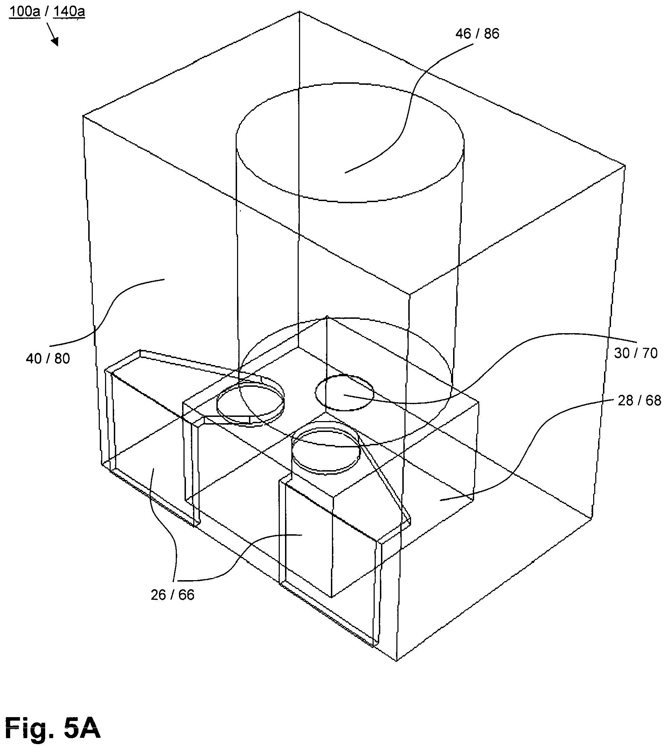

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 2 nachgeordneten Ansprüche verwiesen, andererseits werden weitere Ausgestaltungen, Merkmale und Vorteile der vorliegenden Erfindung nachstehend unter anderem anhand der durch Fig. 5A bis Fig. 10 veranschaulichten sechs Ausführungsbeispiele näher erläutert.

Es zeigt:
- Fig. 1: in konzeptuell-schematischer Darstellung eine Vorrichtung aus dem Stand der Technik, mittels derer optische Signale unter einem Winkel von neunzig Grad zur Emissionsrichtung einkoppelbar sind;
- Fig. 2: in konzeptuell-schematischer Darstellung eine Vorrichtung aus dem Stand der Technik, mittels derer optische Signale mittels einer L-Halterung in zum Wellenleiter axialer Richtung einkoppelbar sind;
- Fig. 3: in perspektivischer Darstellung ein Beispiel für die Realisierung einer für einen Wellenleiter vorgesehenen Ein- bzw. Auskoppelvorrichtung aus dem Stand der Technik;
- Fig. 4: in perspektivischer Darstellung ein Beispiel für die Realisierung einer für vier Wellenleiter vorgesehenen Ein- bzw. Auskoppelvorrichtung aus dem Stand der Technik;
- Fig. 5A: in perspektivischer Darstellung ein erstes Ausführungsbeispiel für eine Vorrichtung gemäß der vorliegenden Erfindung, die nach dem Verfahren gemäß der vorliegenden Erfindung hergestellt ist;
- Fig. 5B: in seitlicher Schnittansicht die Vorrichtung aus Fig. 5A mit in den Führungskanal eingesetztem Wellenleiter;
- Fig. 6: in perspektivischer Darstellung ein zweites Ausführungsbeispiel für eine Vorrichtung gemäß der vorliegenden Erfindung, die nach dem Verfahren gemäß der vorliegenden Erfindung hergestellt ist;
- Fig. 7: in perspektivischer Darstellung ein drittes Ausführungsbeispiel für eine Vorrichtung gemäß der vorliegenden Erfindung, die nach dem Verfahren gemäß der vorliegenden Erfindung hergestellt ist;
- Fig. 8: in perspektivischer Darstellung ein viertes Ausführungsbeispiel für eine Vorrichtung gemäß der vorliegenden Erfindung, die nach dem Verfahren gemäß der vorliegenden Erfindung hergestellt ist;
- Fig. 9: in perspektivischer Darstellung ein fünftes Ausführungsbeispiel für eine Vorrichtung gemäß der vorliegenden Erfindung, die nach dem Verfahren gemäß der vorliegenden Erfindung hergestellt ist; und
- Fig. 10: in perspektivischer Darstellung ein sechstes Ausführungsbeispiel für eine Vorrichtung gemäß der vorliegenden Erfindung, die nach dem Verfahren gemäß der vorliegenden Erfindung hergestellt ist.

Gleiche oder ähnliche Ausgestaltungen, Elemente oder Merkmale sind in Fig. 5A bis Fig. 10 mit identischen Bezugszeichen versehen. Hinsichtlich der Sendeseite und der Empfangsseite wird zeichnerisch nicht unterschieden, jedoch weisen die den sendeseitigen Elementen entsprechenden empfangsseitigen Elemente ein um 40 höheres Bezugszeichen auf.

### Bester Weg zur Ausführung der vorliegenden Erfindung

Zur Vermeidung überflüssiger Wiederholungen beziehen sich die nachfolgenden Erläuterungen hinsichtlich der Ausgestaltungen, Merkmale und Vorteile der vorliegenden Erfindung - soweit nicht anderweitig angegeben - auf alle sechs anhand Fig. 5A bis Fig. 10 veranschaulichten Ausführungsbeispiele der vorliegenden Erfindung.

Bei sendeseitiger Auslegung zeigen Fig. 5A bis Fig. 10 jeweils eine Vorrichtung 100a, 100b, 100c, 100d, 100e, 100f zum Einkoppeln optischer Signale in einen Wellenleiter 10. Die Vorrichtung 100a, 100b, 100c, 100d, 100e, 100f weist einen (nicht dargestellten) sendeseitigen Schaltkreis auf, der auf Basis von von sendeseitigen Anschlusskontakten eingehenden Signalen einen elektro-optischen Wandler 28 ansteuert, der die optischen Signale in Richtung der Achse 12 des Wellenleiters 10 aussendet.

Bei empfangsseitiger Auslegung zeigen Fig. 5A bis Fig. 10 jeweils eine Vorrichtung 140a, 140b, 140c, 140d, 140e, 140f zum Auskoppeln optischer Signale aus mindestens einem Wellenleiter 10 in einen opto-elektrischen Wandler 68, der die optischen Signale aus Richtung der Achse 12 des Wellenleiters 10 aufnimmt und als elektrische Signale an einen (nicht dargestellten) empfangsseitigen Schaltkreis übermittelt, der die eingehenden elektrischen Signale verarbeitet und an empfangsseitige Anschlusskontakte ausgibt.

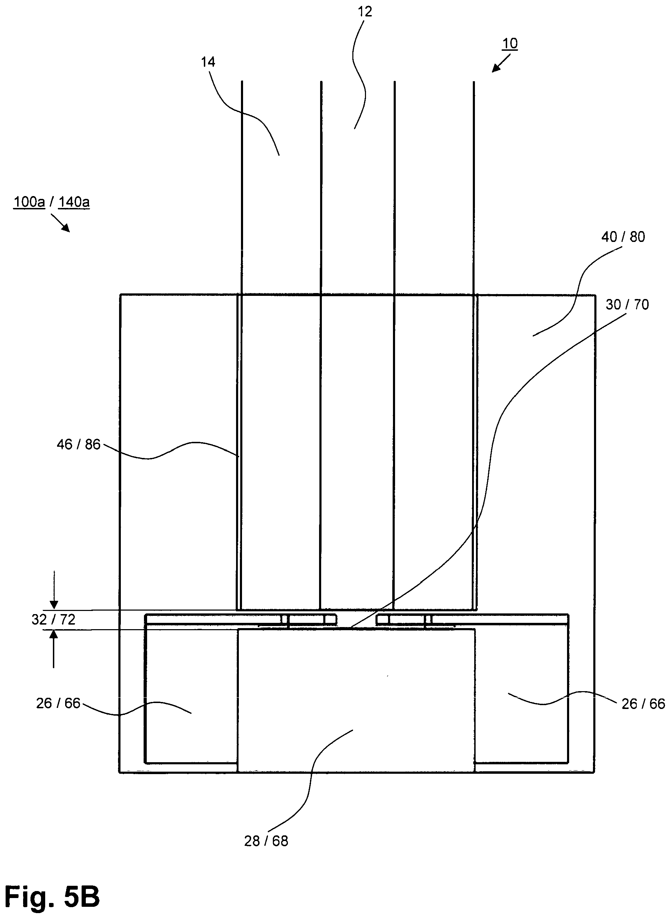

Erfindungsgemäß ist die Anordnung der Elemente in einer aus transparentem Polymer gefertigten optischen Unterbaugruppe oder in einem optischen Sub-Assembly 40 bzw. 80 dergestalt ausgebildet, dass die Kernfläche 12 der optischen Faser 10 auf der Austrittsöffnung 30 des Lasers 28 bzw. auf der aktiven Fläche 70 der Fotodiode 68 direkt aufsitzt bzw. sich in einem Abstand 32 von nur wenigen, zum Beispiel von etwa zwanzig, Mikrometern darüber befindet (vgl. erstes Ausführungsbeispiel gemäß Fig. 5A und Fig. 5B).

Die Anordnung der Elemente im optischen Sub-Assembly 40 bzw. 80 erfordert weder einen Umlenkspiegel noch eine Linse
- zur Ausrichtung des optischen Signals von der Austrittsöffnung 30 des Lasers 28 in die optische Faser 10 bzw.
- zur Ausrichtung des optischen Signals aus der optischen Faser 10 auf die aktive Fläche 70 der Fotodiode 68.

Die Anordnung der metallischen Kontaktierungen bzw. erfolgt vorteilhafterweise so, dass sie zum einen die, insbesondere als metallische Druckkontakte oder Schleifkontakte ausgebildeten, Anschlusskontakte 26 bzw. 66 des eingebetteten optischen Wandlers 28 bzw. 68 elektrisch kontaktieren und zum anderen, aus dem Material des optischen Sub-Assemblys 40 bzw. 80 heraus kommend, auf einer zu den Anschlusskontakten 26 bzw. 66 des optischen Wandlers 28 bzw. 68 um etwa neunzig Grad versetzten Seitenfläche der Außenfläche des optischen Sub-Assemblys 40 bzw. 80 aufliegen (vgl. Fig. 5A und Fig. 5B).

Die Formgebung des optischen Sub-Assemblys 40 bzw. 80 ist dergestalt, dass die optische Faser 10 mit ihrem optischen Kern 12 und mit ihrem den optischen Kern 12 vollständig umschließenden optischen Mantel 14 (vgl. Fig. 5B) in einem passgenauen zylindrischen Faserführungskanal 46 bzw. 86 des optischen Sub-Assemblys 40 bzw. 80 zur Austrittsöffnung 30 des elektro-optischen Wandlers 28 bzw. zur aktiven Fläche 70 des opto-elektrischen Wandlers 68 ausgerichtet ist.

Hierbei kann insbesondere der optische Kern 12 der optischen Faser 10 mittig über der Austrittsöffnung 30 des elektro-optischen Wandlers 28 bzw. mittig über der aktiven Fläche 70 des opto-elektrischen Wandlers 68 ausgerichtet sein (vgl. Fig. 5A und Fig. 5B).

Des Weiteren erlaubt es die Formgebung des optischen Sub-Assemblys 40 bzw. 80, dass die Kernfläche 12 der optischen Faser 10 auf der Austrittsöffnung 30 des Lasers 28 bzw. auf der aktiven Fläche 70 der Fotodiode 68 direkt aufsitzt bzw. sich in einem Abstand 32 von nur wenigen, zum Beispiel von etwa zwanzig, Mikrometern darüber befindet (vgl. erstes Ausführungsbeispiel gemäß Fig. 5A und Fig. 5B).

Durch die vorgenannten technischen Maßnahmen wird ein optisches Sub-Assembly 40 bzw. 80 mit einem Volumen von weniger als einem Kubikmillimeter ermöglicht.

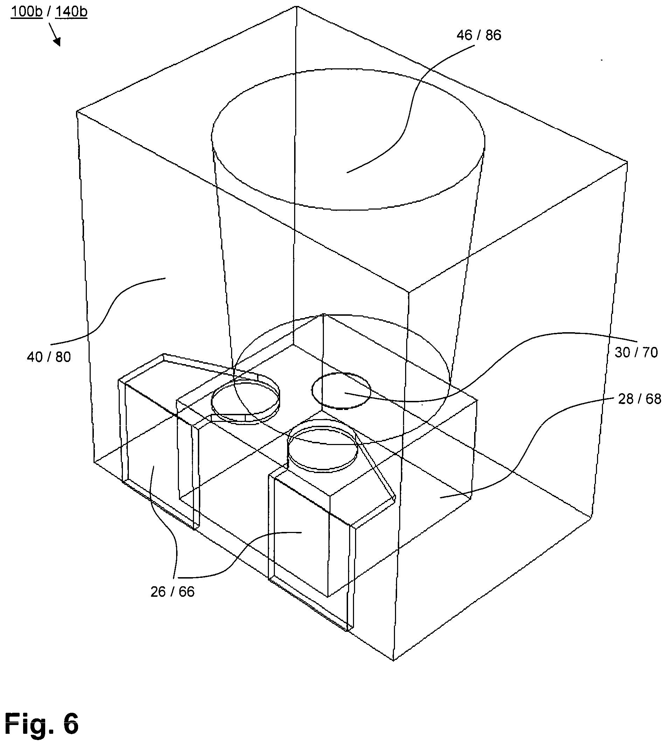

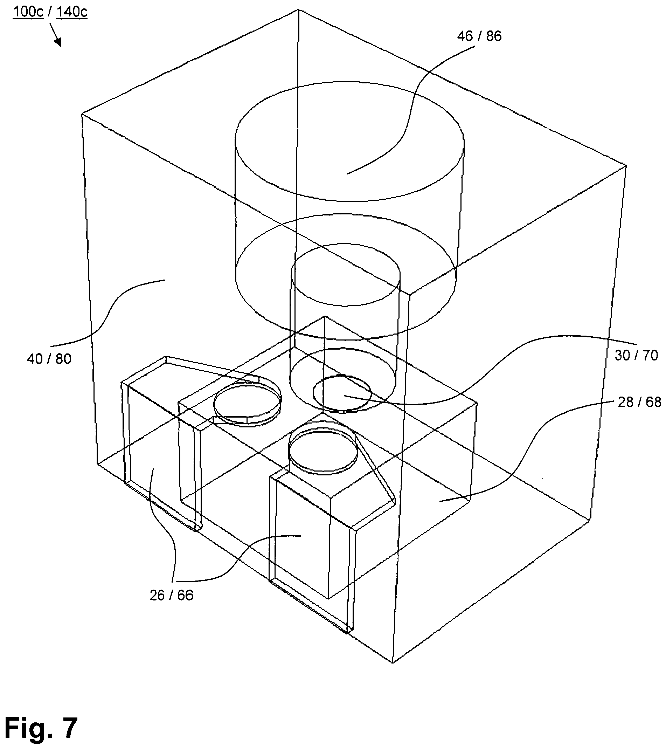

In weiteren Ausführungsbeispielen der vorliegenden Erfindung ist der (Faser-)Führungskanal 46 bzw. 86 im optischen Sub-Assembly 40 bzw. 80 für das vereinfachte und beschleunigte Einsetzen der optischen Faser 10 auch konisch auf den Wandler 28 bzw. 68 zulaufend (vgl. zweites Ausführungsbeispiel gemäß Fig. 6) und mehrstufig (vgl. drittes Ausführungsbeispiel gemäß Fig. 7), insbesondere mit mindestens zwei verschiedenen zylindrischen Innendurchmessern, aufgebaut.

Da es während des Einsetzens der optischen Faser 10, insbesondere in den nicht-konischen Führungskanal 46 bzw. 86, zur Einschließung und Kompression von Luft kommen kann, können eine schlechte optische Kopplung und somit optische Verluste zwischen dem optischen Wandler 28 bzw. 68 und der optischen Faser 10 auftreten.

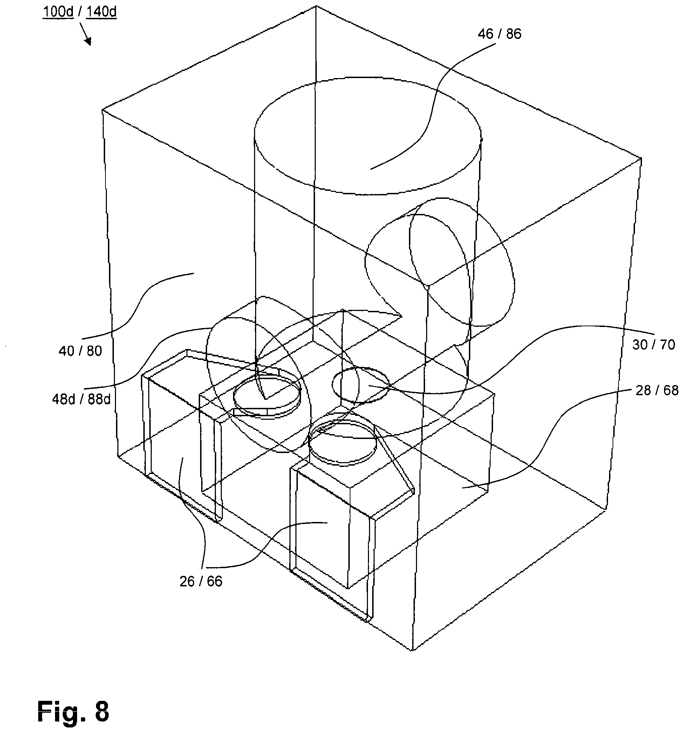

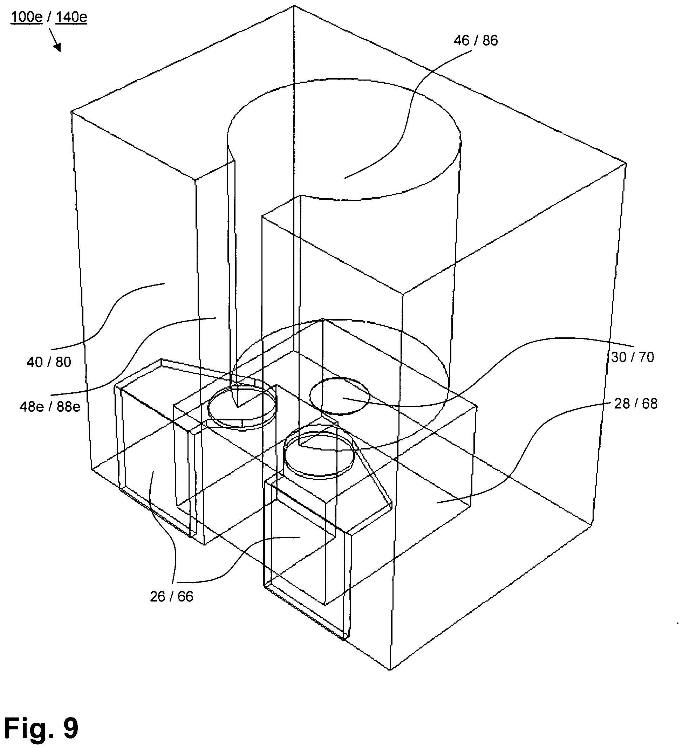

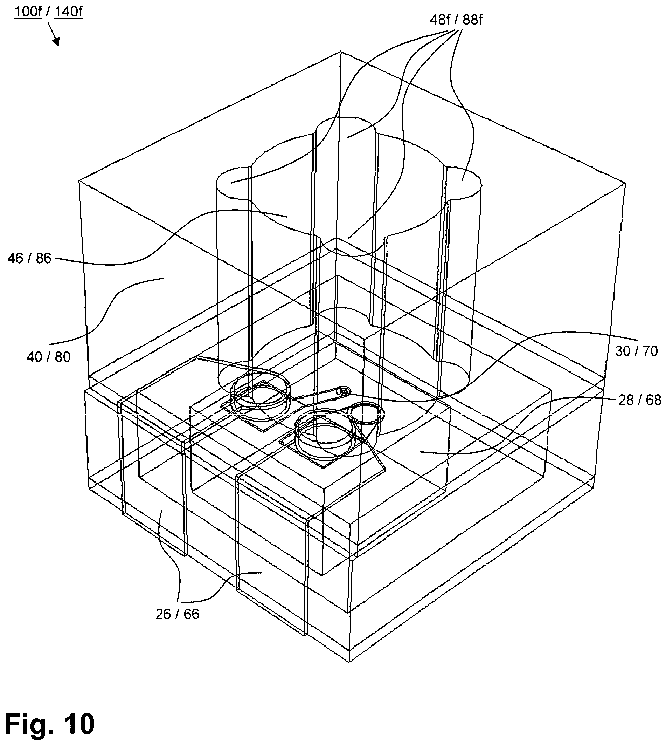

Mithin kann des Weiteren
- mindestens eine zum Beispiel seitlich angeordnete Luftaustrittsöffnung 48d bzw. 88d am dem Wandler 28 bzw. 68 zugewandten Ende des Führungskanals 46 bzw. 86 im optischen Sub-Assembly 40 bzw. 80, wobei die axiale Erstreckung der Luftaustrittsöffnung 48d bzw. 88d quer, insbesondere im Wesentlichen senkrecht, zur Richtung der Achse oder des Kerns 12 des Wellenleiters 10 verläuft (vgl. viertes Ausführungsbeispiel gemäß Fig. 8),
- mindestens eine sich lateral oder seitlich, insbesondere über die gesamte Länge des optischen Sub-Assemblys 40 bzw. 80, zum Beispiel über die gesamte Länge des Führungskanals 46 bzw. 86, erstreckende Luftaustrittsöffnungsnut 48e bzw. 88e (vgl. fünftes Ausführungsbeispiel gemäß Fig. 9) oder
- mindestens einen sich lateral oder seitlich, insbesondere über die gesamte Länge des optischen Sub-Assemblys 40 bzw. 80, zum Beispiel über die gesamte Länge des Führungskanals 46 bzw. 86, erstreckenden Luftaustrittsöffnungskanal 48f bzw. 88f, wobei die exemplarisch vier Luftaustrittsöffnungskanäle 48f bzw. 88f gleichverteilt und symmetrisch um den zylindrischen Führungskanal 46 bzw. 86 herum angeordnet sein können (vgl. sechstes Ausführungsbeispiel gemäß Fig. 10),

vorgesehen sein, um eine gleichmäßige, zuverlässige und vollständige Ableitung der beim Einsetzen des Wellenleiters 10 in den Führungskanal 46 bzw. 86 eingeschlossenen und komprimierten Luft zu gewährleisten.

### Bezugszeichenliste

- 10: Wellenleiter, insbesondere optische Faser
- 12: axiale Richtung des Wellenleiters 10, insbesondere Kern der optischen Faser
- 14: optischer Mantel des Wellenleiters 10
- 26: elektrische, insbesondere auf einer Seitenfläche der sendeseitigen optischen Unterbaugruppe 40 aufliegende, Kontaktierung für elektro-optischen Wandler 28
- 28: elektro-optischer Wandler, insbesondere aktiv-optische Sendeeinheit, zum Beispiel Laser, wie etwa Vertical Cavity Surface Emitting Laser (VCSEL)
- 30: Austrittsöffnung oder aktive Fläche des elektro-optischen Wandlers 28
- 32: Abstand zwischen Austrittsöffnung oder aktiver Fläche 30 des elektro-optischen Wandlers 28 und Kernfläche des Kerns 12 des Wellenleiters 10
- 40: sendeseitige optische Unterbaugruppe, insbesondere sendeseitiges optisches Sub-Assembly
- 46: sendeseitiger Führungskanal
- 48d: Luftaustrittsöffnung, insbesondere in die optische Unterbaugruppe 40 eingebrachter Durchlass, zum Beispiel am dem Wandler 28 zugewandten Ende des Führungskanals 46 quer, wie etwa im Wesentlichen senkrecht, zur Richtung der Achse oder des Kerns 12 des Wellenleiters 10 verlaufende Bohrung (= viertes Ausführungsbeispiel; vgl. Fig. 8)
- 48e: Luftaustrittsöffnung, insbesondere Luftaustrittsnut oder nutförmige Luftaustrittsöffnung (= fünftes Ausführungsbeispiel; vgl. Fig. 9)
- 48f: Luftaustrittsöffnung, insbesondere Luftaustrittskanal oder kanalförmige Luftaustrittsöffnung (= sechstes Ausführungsbeispiel; vgl. Fig. 10)
- 66: elektrische, insbesondere auf einer Seitenfläche der empfangsseitigen optischen Unterbaugruppe 80 aufliegende, Kontaktierung für opto-elektrischen Wandler 68
- 68: opto-elektrischer Wandler, insbesondere aktiv-optische Empfangseinheit, zum Beispiel Diode, wie etwa Fotodiode (PD)
- 70: Eintrittsöffnung oder aktive Fläche des opto-elektrischen Wandlers 68
- 72: Abstand zwischen Kern 12 des Wellenleiters 10 und Eintrittsöffnung oder aktiver Fläche 70 des opto-elektrischen Wandlers 68
- 80: empfangsseitige optische Unterbaugruppe, insbesondere empfangsseitiges optisches Sub-Assembly
- 86: empfangsseitiger Führungskanal
- 88d: Luftaustrittsöffnung, insbesondere in die optische Unterbaugruppe 80 eingebrachter Durchlass, zum Beispiel am dem Wandler 68 zugewandten Ende des Führungskanals 86 quer, wie etwa im Wesentlichen senkrecht, zur Richtung der Achse oder des Kerns 12 des Wellenleiters 10 verlaufende Bohrung (= viertes Ausführungsbeispiel; vgl. Fig. 8)
- 88e: Luftaustrittsöffnung, insbesondere Luftaustrittsnut oder nutförmige Luftaustrittsöffnung (= fünftes Ausführungsbeispiel; vgl. Fig. 9)
- 88f: Luftaustrittsöffnung, insbesondere Luftaustrittskanal oder kanalförmige Luftaustrittsöffnung (= sechstes Ausführungsbeispiel; vgl. Fig. 10)
- 100a: sendeseitige Vorrichtung (= erstes Ausführungsbeispiel; vgl. Fig. 5A und Fig. 5B)
- 100b: sendeseitige Vorrichtung (= zweites Ausführungsbeispiel; vgl. Fig. 6)
- 100c: sendeseitige Vorrichtung (= drittes Ausführungsbeispiel; vgl. Fig. 7)
- 100d: sendeseitige Vorrichtung (= viertes Ausführungsbeispiel; vgl. Fig. 8)
- 100e: sendeseitige Vorrichtung (= fünftes Ausführungsbeispiel; vgl. Fig. 9)
- 100f: sendeseitige Vorrichtung (= sechstes Ausführungsbeispiel; vgl. Fig. 10)
- 140a: empfangsseitige Vorrichtung (= erstes Ausführungsbeispiel; vgl. Fig. 5A und Fig. 5B)
- 140b: empfangsseitige Vorrichtung (= zweites Ausführungsbeispiel; vgl. Fig. 6)
- 140c: empfangsseitige Vorrichtung (= drittes Ausführungsbeispiel; vgl. Fig. 7)
- 140d: empfangsseitige Vorrichtung (= viertes Ausführungsbeispiel; vgl. Fig. 8)
- 140e: empfangsseitige Vorrichtung (= fünftes Ausführungsbeispiel; vgl. Fig. 9)
- 140f: empfangsseitige Vorrichtung (= sechstes Ausführungsbeispiel; vgl. Fig. 10)
- ASIC: Schaltkreis, insbesondere anwendungsspezifische integrierte Schaltung oder Application-Specific Integrated Circuit (ASIC), zum Beispiel custom chip (= Stand der Technik; vgl. Fig. 1 und Fig. 2)
- HA: Halterung (= Stand der Technik; vgl. Fig. 2)
- SI: optisches Signal (= Stand der Technik; vgl. Fig. 1 und Fig. 2)
- US: Umlenkspiegel (= Stand der Technik; vgl. Fig. 1)
- WA: optischer Wandler (= Stand der Technik; vgl. Fig. 1 und Fig. 2)
- WL: optischer Wellenleiter (= Stand der Technik; vgl. Fig. 1 und Fig. 2)

## Patentansprüche

1. Zum Einkoppeln optischer Signale in mindestens einen Wellenleiter (10) vorgesehene Vorrichtung mit mindestens einem elektro-optischen Wandler (28), der die optischen Signale in Richtung der Achse oder des Kerns (12) des Wellenleiters (10) aussendet,
- wobei der elektro-optische Wandler (28) in mindestens einer sendeseitigen optischen Unterbaugruppe (40) aufgenommen, insbesondere eingebettet, ist,
- wobei eine auf einer zu Anschlusskontakten (26) des elektro-optischen Wandlers (28) um etwa neunzig Grad versetzten Seitenfläche der Außenfläche der sendeseitigen optischen Unterbaugruppe (40) aufliegende elektrische Kontaktierung für den elektro-optischen Wandler (28) vorgesehen ist und
- wobei die sendeseitige optische Unterbaugruppe (40) mindestens einen Führungskanal (46) zum Ausrichten des Wellenleiters (10) in Bezug auf den elektro-optischen Wandler (28), insbesondere in Bezug auf die Austrittsöffnung oder aktive Fläche (30) des elektro-optischen Wandlers (28), aufweist,
**dadurch gekennzeichnet,**
**dass** der Führungskanal (46) abgestuft oder mehrstufig auf den elektro-optischen Wandler (28) konisch zulaufend ausgebildet ist, wobei sich der Innendurchmesser des Führungskanals (46) in Richtung auf den elektro-optischen Wandler (28) hin verkleinert.

2. Zum Auskoppeln optischer Signale aus mindestens einem Wellenleiter (10) vorgesehene Vorrichtung mit mindestens einem opto-elektrischen Wandler (68), der die optischen Signale aus Richtung der Achse oder des Kerns (12) des Wellenleiters (10) aufnimmt,
- wobei der opto-elektrische Wandler (68) in mindestens einer empfangsseitigen optischen Unterbaugruppe (80) aufgenommen, insbesondere eingebettet, ist,
- wobei eine auf einer zu Anschlusskontakten (66) des opto-elektrischen Wandlers (68) um etwa neunzig Grad versetzten Seitenfläche der Außenfläche der empfangsseitigen optischen Unterbaugruppe (80) aufliegende elektrische Kontaktierung für den opto-elektrischen Wandler (68) vorgesehen ist und
- wobei die empfangsseitige optische Unterbaugruppe (80) mindestens einen Führungskanal (86) zum Ausrichten des Wellenleiters (10) in Bezug auf den opto-elektrischen Wandler (68), insbesondere in Bezug auf die Eintrittsöffnung oder aktive Fläche (70) des opto-elektrischen Wandlers (68), aufweist,
**dadurch gekennzeichnet,**
**dass** der Führungskanal (86) abgestuft oder mehrstufig auf den opto-elektrischen Wandler (68) konisch zulaufend ausgebildet ist, wobei sich der Innendurchmesser des Führungskanals (46) in Richtung auf den opto-elektrischen Wandler (68) hin verkleinert.

3. Vorrichtung gemäß Anspruch 1 oder 2, **dadurch gekennzeichnet, dass** die optische Unterbaugruppe (40; 80) aus mindestens einem optisch transparenten oder optisch teiltransparenten Medium, insbesondere aus mindestens einem Polymer, gefertigt ist.

4. Vorrichtung gemäß mindestens einem der Ansprüche 1 bis 3, **dadurch gekennzeichnet, dass** der Führungskanal (46; 86) so ausgebildet ist, dass die Aus-/Eintrittsöffnung oder aktive Fläche (30; 70) des Wandlers (28; 68) beabstandet (32; 72) zum Kern (12) des Wellenleiters (10) ist.

5. Vorrichtung gemäß mindestens einem der Ansprüche 1 bis 4, **dadurch gekennzeichnet, dass** der Führungskanal (46; 86) in Bezug auf seine Umfangslinie geschlossen oder partiell geöffnet ausgebildet ist.

6. Vorrichtung gemäß mindestens einem der Ansprüche 1 bis 5, **gekennzeichnet durch** mindestens eine Luftaustrittsöffnung (48d, 48e, 48f; 88d, 88e, 88f), mittels derer beim Einsetzen des Wellenleiters (10) in den Führungskanal (46; 86) eingeschlossene und/oder komprimierte Luft ableitbar ist.

7. Vorrichtung gemäß Anspruch 6, **dadurch gekennzeichnet, dass** die Luftaustrittsöffnung (48d; 88d) am dem Wandler (28; 68) zugewandten Ende des Führungskanals (46; 86) angeordnet ist.

8. Vorrichtung gemäß Anspruch 6 oder 7, **dadurch gekennzeichnet,**
- **dass** die Luftaustrittsöffnung (48d; 88d) in Form mindestens eines in die optische Unterbaugruppe (40; 80) eingebrachten Durchlasses, insbesondere in Form mindestens einer in die optische Unterbaugruppe (40; 80) eingebrachten Bohrung, ausgebildet ist und
- **dass** die axiale Erstreckung des Durchlasses quer, insbesondere im Wesentlichen senkrecht, zur Richtung der Achse oder des Kerns (12) des Wellenleiters (10) verläuft.

9. Vorrichtung gemäß mindestens einem der Ansprüche 6 bis 8, **dadurch gekennzeichnet, dass** die Luftaustrittsöffnung (48e, 48f; 88e, 88f)
- nutförmig oder kanalförmig ausgebildet ist und/oder
- sich entlang dem Führungskanal (46; 86), insbesondere über die gesamte Länge des Führungskanals (46; 86), erstreckt.

10. Vorrichtung gemäß mindestens einem der Ansprüche 1 bis 9, **dadurch gekennzeichnet,**
- **dass** der elektro-optische Wandler (28) mindestens ein Laser, insbesondere mindestens ein Vertical Cavity Surface Emitting Laser (VCSEL), ist und/oder
- **dass** der opto-elektrische Wandler (68) mindestens eine Diode, insbesondere mindestens eine Fotodiode (PD), ist.

11. Dreidimensionales mikro-stereolithografisches Druckverfahren zum Herstellen mindestens einer Vorrichtung gemäß mindestens einem der Ansprüche 1 bis 10.

12. Verwendung mindestens einer Vorrichtung gemäß mindestens einem der Ansprüche 1 bis 11 zum Aufbau mindestens eines, insbesondere steckbaren, aktiven optischen Kabels.

## Claims

1. A device provided for coupling optical signals into at least one waveguide (10), comprising at least one electro-optical converter (28) emitting the optical signals in the direction of the axis or of the core (12) of the waveguide (10),
- wherein the electro-optical converter (28) is accommodated, in particular embedded, in at least one send-site optical subassembly (40),
- wherein an electrical contact for the electro-optical converter (28) is provided on a side surface of the outer surface of the send-site optical subassembly (40), said side surface offset by about ninety degrees relative to connection contacts (26) of the electro-optical converter (28), and
- wherein the send-site optical subassembly (40) comprises at least one guide channel (46) for aligning the waveguide (10) with respect to the electro-optical converter (28), in particular with respect to the outlet opening or active area (30) of the electro-optical converter (28),
**characterized in**
**that** the guide channel (46) is embodied to taper towards the electro-optical converter (28) in a stepped or multi-step manner, the inner diameter of the guide channel (46) decreasing in the direction of the electro-optical converter (28).

2. A device provided for decoupling optical signals from at least one waveguide (10), comprising at least one opto-electrical converter (68) receiving the optical signals from the direction of the axis or of the core (12) of the waveguide (10),
- wherein the opto-electrical converter (68) is accommodated, in particular embedded, in at least one receive-site optical subassembly (80) on the receiving side,
- wherein an electrical contact for the opto-electrical converter (68) is provided on a side surface of the outer surface of the receive-site optical subassembly (80), said side surface offset by about ninety degrees relative to connection contacts (66) of the opto-electrical converter (68), and
- wherein the receive-site optical subassembly (80) comprises at least one guide channel (86) for aligning the waveguide (10) with respect to the opto-electrical converter (68), in particular with respect to the inlet opening or active area (70) of the opto-electrical converter (68),
**characterized in**
**that** the guide channel (86) is embodied to taper towards the opto-electrical converter (68) in a stepped or multi-step manner, the inner diameter of the guide channel (86) decreasing in the direction of the opto-electrical converter (68).

3. The device according to claim 1 or 2, **characterized in that** the optical subassembly (40; 80) is made of at least one optically transparent or optically partially transparent medium, in particular of at least one polymer.

4. The device according to at least one of claims 1 to 3, **characterized in that** the guide channel (46; 86) is embodied such that the out-/inlet opening or active surface (30; 70) of the converter (28; 68) is spaced apart (32; 72) from the core (12) of the waveguide (10).

5. The device according to at least one of claims 1 to 4, **characterized in that** the guide channel (46; 86) is embodied to be closed or partially opened with respect to its circumferential line.

6. The device according to at least one of claims 1 to 5, **characterized by** at least one air outlet opening (48d, 48e, 48f; 88d, 88e, 88f) by means of which air enclosed and/or compressed during insertion of the waveguide (10) into the guide channel (46; 86) is dischargeable.

7. The device according to claim 6, **characterized in that** the air outlet opening (48d; 88d) is arranged at the end of the guide channel (46; 86), said end facing the converter (28; 68).

8. The device according to claim 6 or 7, **characterized in**
- **that** the air outlet opening (48d; 88d) is embodied in the form of at least one passage introduced into the optical subassembly (40; 80), in particular in the form of at least one bore introduced into the optical subassembly (40; 80), and
- **that** the axial extension of the passage runs transversely, in particular essentially perpendicularly, to the direction of the axis or of the core (12) of the waveguide (10).

9. The device according to at least one of claims 6 to 8, **characterized in that** the air outlet opening (48e, 48f; 88e, 88f)
- is embodied in a groove-shaped or channel-shaped manner, and/or
- extends along the guide channel (46; 86), in particular over the entire length of the guide channel (46; 86).

10. The device according to at least one of claims 1 to 9, **characterized in**
- **that** the electro-optical converter (28) is at least one laser, in particular at least one vertical cavity surface emitting laser (VCSEL), and/or
- **that** the opto-electrical converter (68) is at least one diode, in particular at least one photodiode (PD).

11. Three-dimensional micro-stereolithographic printing method for producing at least one device according to at least one of claims 1 to 10.

12. Use of at least one device according to at least one of claims 1 to 10 for building at least one, in particular pluggable, active optical cable.

## Revendications

1. Dispositif prévu pour coupler des signaux optiques dans au moins un guide d'ondes (10), comprenant au moins un convertisseur électro-optique (28) qui émet les signaux optiques dans la direction de l'axe ou du coeur (12) du guide d'ondes (10),
- dans lequel le convertisseur électro-optique (28) est reçu, en particulier encastré, dans au moins un sous-ensemble optique côté émission (40),
- dans lequel une mise en contact électrique pour le convertisseur électro-optique (28) est prévue, ladite mise en contact électrique reposante sur une surface latérale de la surface extérieure du sous-ensemble optique côté émission (40), ladite surface latérale décalée d'environ quatre-vingt-dix degrés par rapport à des contacts de raccordement (26) du convertisseur électro-optique (28), et
- dans lequel le sous-ensemble optique côté émission (40) comprend au moins un canal de guidage (46) pour aligner le guide d'ondes (10) par rapport au convertisseur électro-optique (28), en particulier par rapport à l'ouverture de sortie ou à la surface active (30) du convertisseur électro-optique (28),
**caractérisé en ce**
**que** le canal de guidage (46) est configuré de manière étagée ou à plusieurs niveaux en se rétrécissant de manière conique sur le convertisseur électro-optique (28), le diamètre intérieur du canal de guidage (46) diminuant en direction du convertisseur électro-optique (28).

2. Dispositif prévu pour découpler des signaux optiques d'au moins un guide d'ondes (10), comprenant au moins un convertisseur opto-électrique (68) qui reçoit les signaux optiques provenant de la direction de l'axe ou du coeur (12) du guide d'ondes (10),
- dans lequel le convertisseur opto-électrique (68) est reçu, en particulier encastré, dans au moins un sous-ensemble optique côté réception (80),
- dans lequel une mise en contact électrique pour le convertisseur opto-électrique (68) est prévue, ladite mise en contact électrique reposante sur une surface latérale de la surface extérieure du sous-ensemble optique côté réception (80), ladite surface latérale décalée d'environ quatre-vingt-dix degrés par rapport à des contacts de raccordement (66) du convertisseur opto-électrique (68), et
- dans lequel le sous-ensemble optique côté réception (80) comprend au moins un canal de guidage (86) pour aligner le guide d'ondes (10) par rapport au convertisseur opto-électrique (68), en particulier par rapport à l'ouverture de entrée ou à la surface active (70) du convertisseur opto-électrique (68),
**caractérisé en ce**
**que** le canal de guidage (86) est configuré de manière étagée ou à plusieurs niveaux en se rétrécissant de manière conique sur le convertisseur électro-optique (68), le diamètre intérieur du canal de guidage (86) diminuant en direction du convertisseur électro-optique (68).

3. Dispositif selon la revendication 1 ou 2, **caractérisé en ce que** le sous-ensemble optique (40 ; 80) est fabriqué à partir d'au moins un milieu optiquement transparent ou optiquement partiellement transparent, en particulier à partir d'au moins un polymère.

4. Dispositif selon au moins l'une des revendications 1 à 3, **caractérisé en ce que** le canal de guidage (46 ; 86) est configuré de telle sorte que l'ouverture de sortie/entrée ou la surface active (30 ; 70) du convertisseur (28 ; 68) est espacée (32 ; 72) du coeur (12) du guide d'ondes (10).

5. Dispositif selon au moins l'une des revendications 1 à 4, **caractérisé en ce que** le canal de guidage (46 ; 86) est fermé ou partiellement ouvert par rapport à sa ligne périphérique.

6. Dispositif selon au moins l'une des revendications 1 à 5, **caractérisé par** au moins une ouverture de sortie d'air (48d, 48e, 48f ; 88d, 88e, 88f), au moyen de laquelle de l'air enfermé et/ou comprimé lors de l'insertion du guide d'ondes (10) dans le canal de guidage (46 ; 86) peut être évacué.

7. Dispositif selon la revendication 6, **caractérisé en ce que** l'ouverture de sortie d'air (48d ; 88d) est disposée à l'extrémité du canal de guidage (46 ; 86) orientée vers le convertisseur (28 ; 68).

8. Dispositif selon la revendication 6 ou 7, **caractérisé en ce**
- **que** l'ouverture de sortie d'air (48d ; 88d) est configurée sous la forme d'au moins un passage ménagé dans le sous-ensemble optique (40 ; 80), en particulier sous la forme d'au moins un alésage ménagé dans le sous-ensemble optique (40 ; 80), et
- **que** l'extension axiale du passage s'étend transversalement, en particulier sensiblement perpendiculairement, à la direction de l'axe ou du coeur (12) du guide d'ondes (10).

9. Dispositif selon au moins l'une des revendications 6 à 8, **caractérisé en ce que** l'ouverture de sortie d'air (48e, 48f ; 88e, 88f)
- est en forme de rainure ou en forme de canal et/ou
- s'étend le long du canal de guidage (46 ; 86), en particulier sur toute la longueur du canal de guidage (46 ; 86).

10. Dispositif selon au moins l'une des revendications 1 à 9, **caractérisé en ce**
- **que** le convertisseur électro-optique (28) est au moins un laser, en particulier au moins un laser à émission de surface à cavité verticale (VCSEL), et/ou
- **que** le convertisseur opto-électrique (68) est au moins une diode, en particulier au moins une photodiode (PD).

11. Procédé d'impression micro-stéréolithographique tridimensionnelle pour la fabrication d'au moins un dispositif selon au moins l'une des revendications 1 à 10.

12. Utilisation d'au moins un dispositif selon au moins l'une des revendications 1 à 10 pour la construction d'au moins un câble optique actif, en particulier enfichable.
